# EUROPEAN PATENT APPLICATION

(11) **EP 2 206 835 A1**
(43) Date of publication of application: **14.07.2010**
(21) Application number: 08733913.1
(22) Date of filing: 07.04.2008
(51) Int. Cl.: E02B 3/06, E02B 1/00

(54) **BREAKWATER**

(30) Priority: 19.10.2007 CN 200710165007
(71) Applicant: Chongqing Qianguang Machinery & Electronics Academy, Chongqing 400042 (CN)
(72) Inventor: Chongqing Qianguang Machinery & Electronics Academy, Chongqing 400042 (CN)
(74) Representative: Denjean, Eric
(86) International application number: PCT/CN2008/000700
(87) International publication number: WO 2009/049464

(57) **Abstract**

A breakwater, in which the surface thereof facing the sea (H) is a curved surface rendering the cross section of the breakwater a trapezoid with curved side (ABCDEFG) which comprises a shorter top side (EF), a longer bottom side (AG), and a curved side (ABCDE) facing the sea (H). The curve profile is similar to a recumbent concaved-up parabola.

## Description

### FIELD OF THE INVENTION

The present invention relates to a tsunami breakwater capable of effectively withstanding the attack of tsunami, storm surge or ocean waves.

### DESCRIPTION OF THE RELATED ART

Recently, reports on catastrophes caused by the attack of tsunami or storm surge are impressive. For example, causes for tsunami, especially, the catastrophes caused by the Chilean Tsunami and the Indonesian Tsunami are particularly described in detail and vividly in "Climate Change and Natural Disaster" (edited by HUANG Jianmin and XU Zhihua, December 2005, Meteorological Press, Beijing).

Causes of tsunami generally come from the seabed, such as a seabed earthquake, a volcanic eruption or seabed strata movement, and a tsunami may be also caused if meteorites fall into the sea. A tsunami occurs on average once per year, resulting in tremendous losses to human beings.

The tsunami is almost consistent in terms of its current velocity from the sea level to the sea floor. When the tsunami spreads to a position close to the seashore with large current velocity (the current velocity being approximately 10m/s in the case that the wave height is 10m), a "water wall" is abruptly formed to rush insurgently to the seashore with thunderous noise, which is able to burst the banks, thereby seriously threatening the life and property of human beings.

I. Chilean Earthquake

A strong earthquake occurred at the seabed near Puerto Montt in Chile at 19:11 on May 22, 1960.

II. Chilean Tsunami

After the strong quake, the seawater subsided suddenly and rapidly, and then rose up all of a sudden after about 10 minutes; suddenly the surge galloped, overturned and rolled forward with the wave height of 8-9m and even up to 25m. The howling ocean waves passed across the shoreline and fields irresistibly, and swiftly and violently attacked on the cities and villages in Chile on the east coast of the Pacific Ocean. People staying at the squares, ports, docks and the seaside were all immediately submerged by the huge onrushing waves, the coastwise towns, ports, docks and villages were covered by the seawater instantly, and the seaside vessels, the buildings at the ports and docks were all smashed by the huge waves......

immediately after this, the huge waves subsided rapidly again. The waves swept away, as much as they can, anything on the path along which the waves subsided. The tsunami waves as such rose up and fell down repeatedly and went on for about several hours. The cities on the east coast of the Pacific Ocean, which were just destroyed to be ruins by the earthquake, were then scoured frequently by the ocean waves. People who were buried in detritus and still alive were instead drowned in the onrushing seawater. Several large vessels on which more than one thousand persons took refuge were stricken into pieces or sunk by the surges, as a result, the persons were swallowed instantly by the waves and nobody could narrowly escape. The Pacific Ocean coast in the range of 800km from the south to the north and centering on Puerto Montt were looted by the surges.

III. Chilean Tsunami spread to America, Japan, Former Soviet Union, Philippines, China and other countries.

After the occurrence of Chilean Tsunami, the tsunami waves swept across the west Pacific Ocean islands at a speed of 700km/h and arrived at the Hawaiian Islands of America in only 14 hours. When arriving at the Hawaiian Islands, the surges with the wave height of 9-10m destroyed the seawall at the west seashore of the Hawaiian Islands, with a large number of trees, telegraph poles, houses and building facilities along the seawall being scoured to fall, and a large tract of land being flooded.

The tsunami waves took less than 24 hours to arrive at the transpacific Japanese Islands through traveling by about 17000km. At that time, the ocean waves were still billowy and smashed into the seaside cities in the Japanese Islands with the wave height of 6-8m and even up to 8.1m. At Honshu, Hokkaido and other places, vessels anchored in the bays, coastwise bays and a variety of building facilities were all greatly destroyed. The cities, villages, some houses bordering on the Pacific Ocean and some persons having no time to escape were all engulfed into the sea by the surge which came all of a sudden. At that moment, everywhere was overwhelmed by the water and the waves were so turbulent, and the banks, houses, trees, buildings and so on were either washed away or destroyed, with the streets becoming channels along which the seawater advanced and retreated. In Japan, the catastrophe resulted from the Chilean Tsunami caused the consequence that hundreds of people were killed, together with about 4000 houses being damaged, over 100 vessels being sunk, and most of the coastwise docks, ports and the facilities thereof being destroyed.

Chilean Tsunami further spread to the Pacific Ocean coast of Former Soviet Union. Near the Kamchatka Peninsula and Karafuto, the surges caused by the tsunami waves had a height of about 6-7m, bringing about damage with varying degrees of the coastwise building, vessels and docks as well as casualties, and so on. In the neighborhood of the Philippine Islands, the surges caused by the Chilean tsunami had also a height of about 7-8m, and the coastwise cities and residents in villages were all fallen in misfortune.

IV. Huge tsunami caused by the Indonesian strong earthquake

A magnitude 9 strong earthquake occurred at 10km underwater in the sea area near Aceh Province in the Sumatra Island of Indonesia at 8:58 on December 26, 2004. Since the epicenter thereof was located in the sea area, casualties and property losses caused by the earthquake itself were relatively slight, however, a huge tsunami with the wave height of 10m caused by the earthquake brought about tremendous and terrible natural disasters to many countries in the region bordering on the Indian Ocean.

Casualties and property losses in many countries were wondrously serious as a result of the attack by the tsunami.

The Indian Ocean huge tsunami caused by the Indonesian strong earthquake was a peculiar catastrophe resulting in collective death of human beings, and further, a catastrophe resulting in huge psychological trauma to human beings, in which about 355 thousand persons lost their precious lives, over 500 thousand persons were wounded, and over 1 million persons became destitute and homeless......

13 countries such as Indonesia and Sri Lanka in Southeast Asia, South Asia and East African were directly affected by the catastrophe. Reports on dead and missing persons came from 40 countries and territories......

Statistics data on the arrival time of the Indian Ocean tsunami waves and the death toll are listed in the table below.

| County | Indonesia | Thailand | Malaysia | Burma | Bengal | Sri Lanka | India | Maldives | Somalia | Nicobar Islands (India) |
|---|---|---|---|---|---|---|---|---|---|---|
| After earthquake(h) | 0.5 | 1 | 1 | 1 | 2 | 2 | 2.5 | 1 | 7.25 | 0.5 |
| Death (persons) | 228000 | 5384 | 68 | 59 | 2 | 31000 | 88000 | 82 | 150 | 1894 |

V . Storm surge disaster

Storm surge is a serious natural disaster occurred in the coast. Storm surge, also referred to as "Meteorological Tsunami" or "Storm Tsunami", refers to an abnormal fluctuating phenomenon of sea level caused by a gale or a drastic change of air pressure. Sometimes, it comes together with a typhoon or cold waves, and easily results in a disaster due to a super set-up, especially when the time a storm surge occurs is overlapped with the time when an astronomical high tide occurs.

A strong typhoon storm surge occurred in the region of Shantou in Guangdong on August 2, 1922, resulting in an extraordinarily serious storm surge disaster, with over 70 thousand persons being dead and 300 thousand persons becoming destitute and homeless.

How to minimize the risk of natural disasters caused by tsunami, hurricane, storm surge and ocean waves?

The most effective way is to construct a tsunami breakwater along the coast. If there are highly effective tsunami breakwaters constructed at the seashores in the coastal cities, at a time of a tsunami, surges caused by the tsunami cannot pass across the breakwater, thereby resulting in neither catastrophes in which towns, streets and buildings inside the breakwater are scoured to fall and flooded, nor miserable results just like those caused by the Chilean Tsunami or the Indonesian Tsunami. Under this circumstance, people living by the sea can stably work, live and make amusement without worrying about a raid by a tsunami. A new anti-collapse barrage is disclosed in Chinese Patent No. CN 1258784 A, the barrage is characterized in that an anti-collapse flood control layer and gravel layer are built on a side of the barrage facing a riverway. The barrage can function to prevent from being collapsed to some extent, thereby improving its capability in flood control. However, it has the same configuration as that of typical barrages, specifically, viewed from its shape, it is composed of an inclined surface facing the sea, a rear surface and a bottom surface connected with a foundation, and viewed from its cross section, it is a trapezoid with a shorter top side and a longer bottom side. A barrage and a waterproof method are disclosed in Chinese Patent No. CN 1329688, the cross sectional configuration of the barrage is still a trapezoid with a shorter top side and a longer bottom side. Such trapeziform breakwater can provide a static protection function when the seawater rises slowly and gradually. However, when being raided by a surge, such as a tsunami, in which the seawater rushes to the bank with a galactic horizontal velocity and a large impact force, breakwaters with a trapeziform cross section render two weaknesses as follows.

First, when surges caused by the tsunami directly impact the coastwise breakwater, the breakwater is subjected instantaneously to a overwhelming impact force of the surges, that is, a large impact force resulted from the ocean waves is applied to the whole surface of the breakwater facing the sea almost at the same time. Thus, an accident easily occurs that the bank is washed off.

Second, surges caused by the tsunami easily pass over the breakwater by means of their rapid horizontal impact, thereby resulting in a catastrophe in which towns, streets, ports and a variety of city facilities inside the breakwater are all scoured to fall and flooded.

A method for tsunami prevention is disclosed in Chinese Patent No. CN1804224, the aim thereof is to weaken the impact force caused by the tsunami. The method is a preventive measure in addition to that provided by the existing breakwater constructed of cements alongside the seashores. The method is characterized in that: a large water bag wall made of synthetic materials is placed in the seawater 50-80m away from the beach; a tsunami prevention wall is formed of a fabric web; a large water-gas bag is made of synthetic materials, wherein a upper small portion of the large water-gas bag is filled with gas and floating on the seawater and can be designed to be in the form of various sights such as animals, plants, personalities, artwork and so on, and a lower big portion thereof is filled with water; traction cord springs are provided to retard the impact force; and the above devices are fixed into the seafloor via a metal converse fork. The method for tsunami prevention has a effect of weakening the impact force caused by the ocean waves with regard to gentle ocean waves; however, in relation to larger ocean waves as those caused by the tsunami, the impact force resulted therefrom is huge, thus, the method by means of "retarding the impact force by traction cord springs fixed into the seafloor via a metal converse fork" is helpless. That is, it is undoubted that the tsunami prevention wall formed of the large water-gas bag and floating on the sea level will be swept away by the surges resulted from the tsunami. Moreover, the tsunami prevention wall formed of such large water-gas bag has a further drawback of being difficult to be built and to be maintained for a long time after being built.

### SUMMARY OF THE INVENTION

An object of the invention is to provide a breakwater capable of effectively withstand the attack of tsunami, so that at the time when a tsunami arrives suddenly, towns, streets, ports and so on close to the seashore can be protected from catastrophes resulted from the tsunami. The present invention also provides a method for protecting a bay by using the tsunami breakwater to protect vessels anchored within the bay from the attack of tsunami.

In order to achieve above objects, the tsunami breakwater of the invention has a special shape. The surface of the breakwater facing the sea is a curved surface. When viewed from its cross section, the breakwater exhibits a curved side trapezoid with a shorter top side, a longer bottom side, and a side facing the sea and in the form of a curve. The position of the curved side trapezoid close to the seashore is the lowest point. The neighborhood of the lowest point is relatively flat. As the curve bends upward gradually from the lowest point to a position close to the breakwater, a bending radius thereof is decreased by degrees and a center of curvature thereof is also lowered by degrees. The center of curvature at a position close to the top surface of the breakwater has been lowered below the height of the breakwater. The curve from here on extends to the top surface of the breakwater in the form of a vertical line, or a straight line or a curve slightly inclined outwards. The profile of the curved side of the curved side trapezoid is similar to a recumbent concaved-up parabola, representing that the surface of the tsunami breakwater facing the sea is in the form of a paraboloid shaped surface. The breakwater has a suitable height, an appropriate wide, a proper sectional profile and reasonable construction intensity. The top surface of the breakwater can be used as a road, a footpath or a sightseeing stand. In addition, on the top and rear surfaces of the breakwater, trees, flowers and grasses can be planted so as to provide a garden, such that the breakwater can become both a breakwater which can effectively withstand the attack of tsunami and a pleasing, magnificent and beautiful landscape in coastwise cities.

The method for protecting a bay by using the tsunami breakwater of the invention is that constructing the tsunami breakwater at an entrance of the bay according to the applicable terrain or the shape of the seashore, wherein the breakwater is built by the sea and extends into the seawater at the entrance of the bay, and the sea area at the entrance of the bay is not completely closed by the breakwater such that a section of the sea area is left free of connections and serves as a channel for navigation of vessels. The bay built in this way is not only convenient for vessels to navigate into or out of the bay, but also greatly weakens an impact force caused by the surges at the time when the tsunami arrived due to a reduced channel area through which the ocean waves can get into or out of the bay by the tsunami breakwater, thereby protecting the vessels within the bay from the attack of tsunami.

Thanks to the curved surface with a profile of a parabola provided on the surface of the tsunami breakwater facing the sea, at the time of a tsunami, ocean waves rush to the seashore with a tremendous force, and the front end thereof first contacts the lowest position of the curved surface close to the seashore and then makes a gradual upward bending movement along the profile of the curved surface. Meanwhile, the tremendous impact force of the ocean waves is transferred to the foundation of the breakwater in a normal direction of the curved surface. The foundation then transfers a reaction force through the curved surface back to ocean waves after receiving the tremendous impact force, thereby keeping the ocean waves moving in a tangential direction of the curved surface. The ocean waves, initially rushing horizontally to the seashore, finally rush to the sky in the tangential direction of the curved surface since the reaction force from the curved surface of the breakwater gradually changes the moving direction of the ocean waves. The seawater falling back after vertically rushing to the sky also functions to prohibit the impact of the ocean waves.

The tsunami breakwater of the invention has two prominent advantages as compared with the prior art breakwater.

First, at the time when the surges resulted from the tsunami directly rush to the breakwater, the curved surface of the breakwater gradually weakens the tremendous force of the surges, thereby changing a fashion in which the ocean waves lash at the bank from an instantaneous impact to a gradual impact, thus, the impact force of the ocean waves is reduced greatly, correspondingly, the capacity of the breakwater of withstanding the ocean waves is improved due to a balanced stress thereon.

Second, the ocean waves rushing rapidly to the seashore rush to the sky vertically along the profile of the curved surface, and then fall back into the sea, since the reaction force provided by the curved surface of the breakwater changes the moving direction of the ocean waves gradually. Thus, tremendous catastrophes caused by the ocean waves passing across the breakwater are avoided in which buildings are swept away by the seawater and lands are flooded.

### BRIEF DESCRIPTION OF THE DRAWINGS

Figure 1 is a sectional view of a prior art breakwater taken along its cross section.

Figure 2 is a sectional view of a tsunami breakwater according to the invention taken along its cross section.

Figure 3 is a plan view showing a situation in which a bay is protected by using the tsunami breakwater.

Figure 4 is a photograph of a breakwater model used in an ocean wave impact simulation test.

Figure 5 is a photograph showing a moment, during the simulation test, at which the surges pass over the prior art breakwater.

Figure 6 is a photograph showing a moment, during the simulation test, at which the surges are directed to rush to the sky along the curved surface of the tsunami breakwater according to the invention.

### DETAILED DESCRIPTION

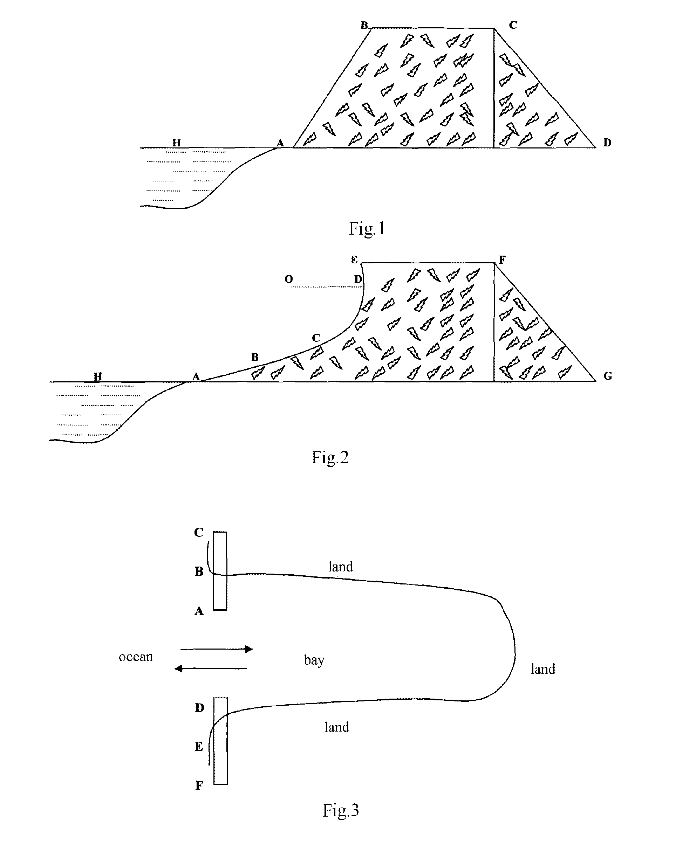

A prior art breakwater is shown in a sectional view taken along its cross section, as shown in Fig. 1, in order to indicate the characteristic differences between a typical breakwater and a tsunami breakwater according to the invention. The cross section of the breakwater shown in Fig. 1 is a trapezoid ABCD with a shorter top side BC, a longer bottom side AD and a lateral side AB facing the sea H being in the form of a straight line, wherein the bevel side AB indicates that a surface of the prior art breakwater facing the sea is in the form of a slope.

Fig. 2 is a sectional view of the tsunami breakwater according to the invention taken along its cross section. Viewed from its cross section, the breakwater is a curved side trapezoid ABCDEFG with a shorter top side EF, a longer bottom side AG and a lateral side ABCDE facing the sea H being in the form of a curve. The position A of the curved side trapezoid close to the seashore is the lowest point, and the neighboring area thereof is relatively flat. As the curve bends upward gradually in a direction from point A to points B, C, D..., its bending radius is decreased gradually, and its center of curvature is also lowered by degrees. The height of the center of curvature O of the curve at position D close to point E on the top side of the breakwater has been lowered below the height of the breakwater. Curve DE after point D extends up to point E on the top surface in the form of a vertical line, or a straight line or a curve slightly inclined outwards. The profile of the curved side ABCDE of the curved side trapezoid is similar to a recumbent concaved-up parabola, representing that the surface of the tsunami breakwater facing the sea is in the form of a paraboloid shaped surface.

Fig. 3 is a plan view showing a state in which a bay is protected by using the tsunami breakwater. The bay shown in Fig. 3 is a pockety bay with three sides thereof bordering on the land and one side adjacent to the sea. Tsunami Breakwaters CBA and FED are constructed at an entrance of the bay, with sections CB and FE of the breakwaters being built at the coast and sections BA and ED extending into the seawater at the entrance of the bay. The sea area not connected by the breakwater between points A and D serves as a channel for navigation of vessels. The directions in which the vessels navigate into or out of the bay are shown by arrows in Fig. 3.

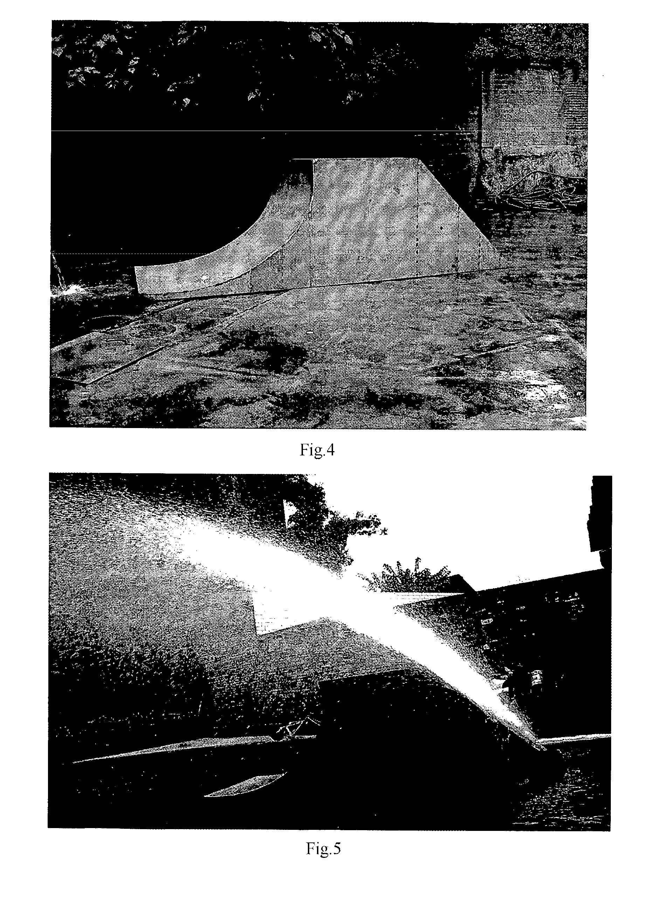

Fig. 4 shows a breakwater model used for an ocean wave impact simulation test. In order to compare and test the effect of the breakwater when it is lashed by ocean waves, a breakwater model used for test is made according to the invention. The left surface of the model is fabricated to be a curved shape as that of the tsunami breakwater of the invention, while the right surface of the model is fabricated to be a slope shape as that of the prior art breakwater. The heights in the left and right surfaces of the breakwater model are the same. Different effects resulted from two kinds of breakwaters can be shown when the simulative ocean waves lash at the left or right surface of the model respectively.

According to the invention, the effect of ocean waves lashing at the breakwater is stimulated by water streams ejected by a water pump, with the flow rate of the ejected water stream being 360 1/min and the flow velocity thereof being 10m/s.

Fig. 5 is a photograph showing a moment at which the simulative ocean waves lash at and pass over the prior art breakwater while the surface of the prior art breakwater is lashed by the simulative ocean waves simulated via the ejected water streams. It can be seen from the photograph that the simulative ocean waves easily pass over the prior art breakwater. Thus, it can be verified by the test that the prior art breakwater is helpless in case of the ocean waves with a large traverse velocity.

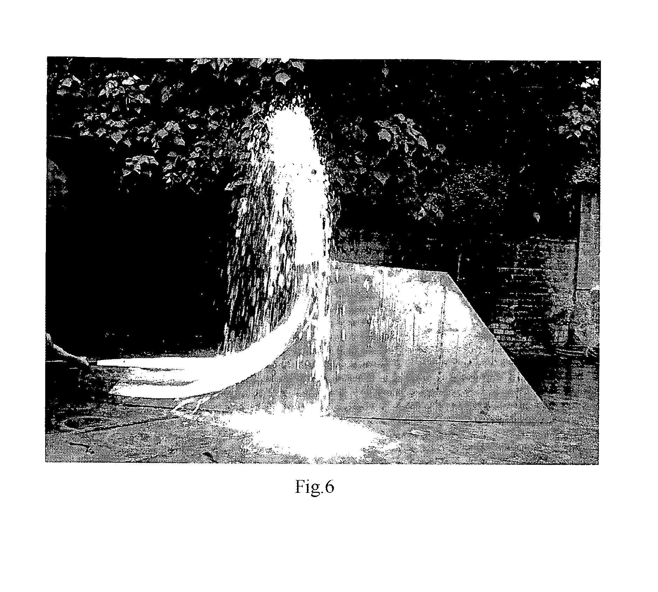

Fig. 6 is a photograph showing a moment at which the simulative ocean waves, which rush horizontally, change their direction upward gradually along the curved surface and become an ejecting water column rushing vertically to the sky when finally leaving the top surface of the breakwater while the curved protection surface of the tsunami breakwater of the invention is lashed by the simulative ocean waves simulated via the ejected water streams with the same flow rate and the same flow velocity as those in Fig. 5. It can be seen from the photograph that the simulative ocean waves with a large horizontal velocity and a large impact force cannot pass over the breakwater with a curved surface. Thus, it can be verified by this test that the tsunami breakwater of the invention is highly effective in withstanding the ocean waves with a large traverse velocity.

## Claims

1. A tsunami breakwater comprising a protection surface facing the sea, a top surface, a rear surface and a bottom surface connected with a foundation, wherein the protection surface of the breakwater is a curved surface; when viewed from its cross section, the breakwater exhibits a curved side trapezoid with a shorter top side, a longer bottom side, and a side facing the sea in the form of a curve, and the curved side trapezoid has its lowest point at a position close to the seashore, the area in the vicinity of the lowest point being relatively flat, and wherein as the curve extends from the lowest point to a position close to the breakwater, it bends upward gradually, with a bending radius thereof decreasing by degrees and a center of curvature thereof lowering by degrees till the center of curvature at a position close to the top surface of the breakwater being lowered below the height of the breakwater, and thereafter the curve extends to the top surface of the breakwater in the form of a vertical line, or a straight line or a curve slightly inclined outwards; and wherein the profile of the curved side of the curved side trapezoid is similar to a recumbent concaved-up parabola, representing that the protection surface of the tsunami breakwater facing the sea is in the form of a paraboloid shaped surface.

2. A method for protecting a bay by using the tsunami breakwater as claimed in claim 1, the method comprising constructing the tsunami breakwater at an entrance of the bay according to the practical terrain or the shape of the seashore, wherein the breakwater is built by the sea and extends into the seawater at the entrance of the bay, and the sea area at the entrance of the bay is not completely closed by the breakwater such that a section of the sea area that is left open serves as a channel through which vessels pass.
